# EUROPÄISCHE PATENTANMELDUNG

(11) **EP 1 199 242 A2**
(43) Veröffentlichungstag der Anmeldung: **24.04.2002**
(21) Anmeldenummer: 01122670.1
(22) Anmeldetag: 28.09.2001
(51) Int. Cl.: B62D 1/06

(54) **Lenkrad mit Dekorelement**

(30) Priorität: 09.10.2000 DE 20017288 U
(71) Anmelder: TRW Automotive Safety Systems GmbH, 63743 Aschaffenburg (DE)
(72) Erfinder: Albayrak, Gökay, 63543 Neuberg (DE); Lehmann, Michael, 63739 Aschaffenburg (DE)
(74) Vertreter: Kitzhofer, Thomas, Dipl.-Ing.

(57) **Zusammenfassung**

Ein Lenkrad mit einer Nabe (14), einem Lenkradkranz (12) und wenigstens einer Nabe (14) und Lenkradkranz (12) verbindenden Speiche (16), wobei der Lenkradkranz (12) und/oder die Speiche (16) ein Skelett (20) und eine das Skelett (20) umgebende Umschäumung (22) oder Umspritzung aufweisen bzw. aufweist, mit wenigstens einem Dekorelement (18), ist dadurch gekennzeichnet, daß das Skelett (20) eine Ausnehmung (24) aufweist und daß das Dekorelement (18) ein Befestigungselement (26) aufweist, das in die Ausnehmung (24) hineinragt

## Beschreibung

Die Erfindung betrifft ein Lenkrad mit einer Nabe, einem Lenkradkranz und wenigstens einer Nabe und Lenkradkranz verbindenden Speiche, wobei der Lenkradkranz und/oder die Speiche ein Skelett und eine das Skelett umgebende Umschäumung oder Umspritzung aufweisen bzw aufweist, mit wenigstens einem Dekorelement.

Dekorelemente, die Teile des Lenkradkranzes abdecken, werden z.B. zusammen mit einer Lenkradbelederung verwendet, um dem Lenkrad ein hochwertiges Aussehen zu verleihen, Diese Dekorelemente weisen spezielle Oberflächen, z.B. aus Holz, Holzimitat, Aluminium, Kohlefaser oder dergleichen auf Um ein möglichst flexibles Design des Lenkrads zu ermöglichen, ist es wünschenswert, daß diese Dekorelemente einfach am Lenkrad zu befestigen sind, so daß auf einem Lenkradgrundkörper je nach gewünschtem Design das passende Dekorelement angebracht werden kann.

Dies wird bei einem erfindungsgemäßen Lenkrad dadurch erreicht, daß das Skelett eine Ausnehmung aufweist und daß das Dekorelement ein Befestigungselement aufweist, das in die Ausnehmung hineinragt. So läßt sich eine direkte Verbindung mit dem Lenkradskelett und dadurch eine sichere Befestigung des Dekorelements erreichen. Es werden keine zusätzlichen Teile, wie z.B. Klammern benötigt.

Das Skelett kann mit einer beliebigen Anzahl solcher Ausnehmungen versehen werden, wobei die nicht zur Befestigung von Dekorelementen benötigten Ausnehmungen von der Umschäumung oder Umspritzung überdeckt werden können.

Vorzugsweise ist die Ausnehmung als Durchbruch ausgebildet. Das Skelett weist also durchgehende Öffnungen auf. Dies ist in der Herstellung besonders einfach.

Es ist vorteilhaft, wenn das Befestigungselement das Dekorelement mit dem Skelett verbindet. Besonders günstig ist es, wenn das Befestigungselement Rastmittel aufweist, z.B. einstückig daran angeformte Rasthaken, die am Skelett angreifen können. Dies reduziert die Zahl der herzustellenden Bauteile. Bevorzugt sind die Rastmittel so ausgebildet, daß zur Befestigung des Dekorelements am Skelett kein Werkzeug notwendig ist.

In einer bevorzugten Ausführungsform der Erfindung besteht die Umschäumung oder Umspritzung aus zwei Schalenteilen, die zusammen das Skelett umgeben. Die Schalenteile können unabhängig vom Skelett in einem Spritzgußverfahren gefertigt werden, so daß kein besonderes Werkzeug vorgesehen werden muß, um die Ausnehmung im Skelett während des Umschäumens oder Umspritzens freizuhalten. Die Schalenteile werden um das Lenkradskelett zusammengesetzt und auf bekannte Weise, z.B. durch Kleben, miteinander verbunden.

Eine andere bevorzugte Ausführungsform der Erfindung sieht vor, daß die Umschäumung oder Umspritzung eine Aussparung aufweist, die sich in Verlängerung der Ausnehmung im Skelett bis zum Außenrand der Umschäumung oder Umspritzung erstreckt. Während des Umschäumens bzw. Umspritzens des Lenkradskeletts wird durch das Spritzgußwerkzeug die Ausnehmung im Skelett sowie ein sich daran anschließender Raum bis zum äußeren Rand der Umschäumung oder Umspritzung freigehalten, damit das Dekorelement anschließend einsetzbar ist.

Die Aussparung ist vorzugsweise wenigstens teilweise durch einen Stopfen verschlossen, der nach dem Umschäumen oder Umspritzen des Lenkrades in die Aussparung eingesetzt werden kann, so daß der Außenrand der Umschäumung/Umspritzung geschlossen ist. Der Stopfen kann aus dem gleichen Material wie die Umschäumung/Umspritzung bestehen

Weitere Merkmale und Vorteile der Erfindung ergeben sich aus der nachfolgenden Beschreibung zweier Ausführungsbeispiele mit Bezug auf die beigefügten Zeichnungen In diesen zeigen:

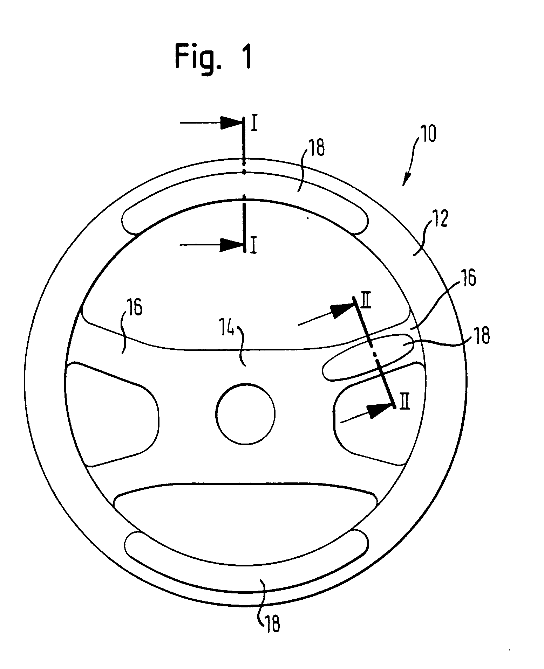

- Figur 1 ein erfindungsgemäßes Lenkrad mit Dekorelementen;
- Figur 2 einen Schnitt durch ein erfindungsgemäßes Lenkrad gemäß einer ersten Ausführungsform entlang der Linie I-I oder II-II aus Figur 1; und
- Figur 3 einen Schnitt durch ein erfindungsgemäßes Lenkrad gemäß einer zweiten Ausführungsform entlang der Linie I-I oder II-II aus Figur 1.

Das erfindungsgemäße Lenkrad 10 weist einen Lenkradkranz 12, eine Nabe 14 sowie Lenkradkranz und Nabe verbindende Speichen 16 auf

Am Lenkradkranz 12 und/oder den Speichen 16 sind Dekorelemente 18 angebracht. Die Dekorelemente 18 erstrecken sich über einen Abschnitt des Lenkradkranzes und umgeben den Lenkradkranz in Umfangsrichtung teilweise. An jeder Speiche ist darüber hinaus ein weiteres Dekorelement 18, von dem nur eines dargestellt ist, angebracht. Die Dekorelemente 18 sind vorzugsweise im Spritzgußverfahren gefertigte Kunststoffteile, die zusätzlich mit einer besonderen Oberflächenschicht (hier nicht gezeigt) versehen sind.

Jedes Dekorelement 18 weist ein Befestigungselement 26 auf, das an seiner zum Lenkradkranz 12 gerichteten Innenseite angeordnet ist. Das Befestigungselement 26 kann einstückig mit dem Dekorelement 18 ausgebildet sein. Am freien Ende des Befestigungselements, das in Form eines stiftartigen Fortsatzes ausgebildet ist, sind Rastmittel, in diesem Fall Rasthaken 27, ausgebildet.

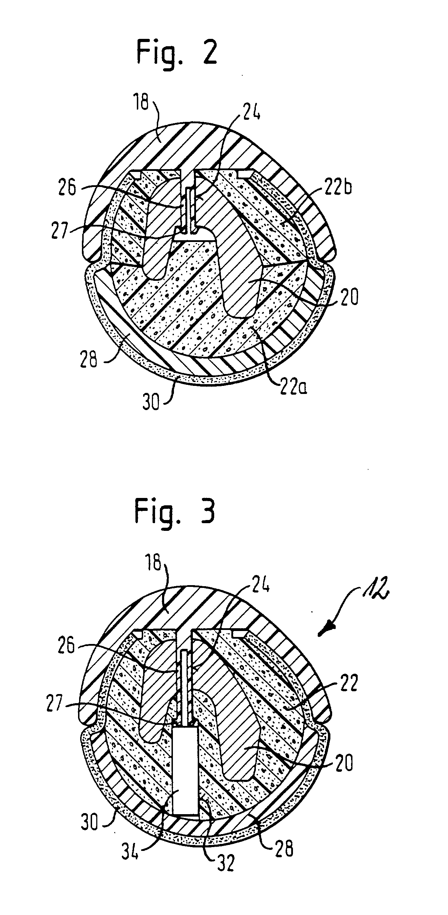

Wie in den Figuren 2 und 3 zu sehen ist, weisen der Lenkradkranz 12 und/oder die Speichen 16 in ihrem Inneren ein von einer Umschäumung 22, 22a, 22b umgebenes Skelett 20 auf. Anstatt der Umschäumung kann auch eine Umspritzung gleicher Außengeometrie vorgesehen sein, wobei im folgenden aber zur Vereinfachung nur von Umschäumung die Rede ist.

Gemäß einer in Figur 2 dargestellten ersten Ausführungsform der Erfindung besteht die Umschäumung aus zwei separaten zusammengesetzten Schalenteilen 22a, 22b, d.h., es werden geschäumte Teile in einer separaten Form hergestellt, ohne direkt das Skelett zu umschäumen, was aber auch als Alternative möglich wäre.

Das Skelett 20 weist eine Ausnehmung 24 auf, die als Durchbruch durch das Skelett 20 ausgeführt ist.

Zum Zusammenbau des Lenkrades werden die beiden Schalenteile 22a, 22b um das Skelett 20 herum zusammengesteckt und aneinander befestigt. Anschließend kann eine Belederung 30 auf den Lenkradkranz und/oder die Speichen aufgezogen werden Das Dekorelement 18 wird so auf den Lenkradkranz 12 oder die Speiche 16 aufgesetzt, daß das Befestigungselement 26 in die Ausnehmung 24 des Skelettes 20 hineinragt und die Rasthaken 27 mit dem rückwärtigen Rand der Ausnehmung verrasten Dabei können die Ränder der Belederung 30 unter dem Dekorelement 18 verklemmt werden.

In einer zweiten Ausführungsform der Erfindung weist das Skelett 20 ebenfalls eine als Durchbruch ausgeführte Ausnehmung 24 auf Die Umschäumung oder Umspritzung 22 wird jedoch direkt auf das Skelett 20 aufgebracht. Beim Umschäumen bzw. Umspritzen wird eine Aussparung 32 freigelassen, die aus fertigungstechnischen Gründen benötigt wird, um die Ausnehmung 24 freizuhalten.

Nach dem Umschäumen bzw. Umspritzen wird die Aussparung 32 durch einen Stopfen 34, der aus dem gleichen Material wie die Umschäumung 22 bestehen kann, verschlossen, so daß die Umschäumung eine geschlossene Oberfläche bildet. Der Zusammenbau des Lenkrades erfolgt wie oben beschrieben.

Die Verrastung des Befestigungselements 26 kann auch in der Umschäumung 22 erfolgen, wie Figur 3 zeigt.

An den von Dekorelementen 18 bedeckten Abschnitten von Lenkradkranz 12 oder Speichen 16 kann zusätzlich zum Ausgleich der Dicke der Umschäumung eine Einlage 28 vorgesehen sein.

## Patentansprüche

1. Lenkrad mit einer Nabe (14), einem Lenkradkranz (12) und wenigstens einer Nabe (14) und Lenkradkranz (12) verbindenden Speiche (16), wobei der Lenkradkranz (12) und/oder die Speiche (16) ein Skelett (20) und eine das Skelett (20) umgebende Umschäumung (22, 22a, 22b) oder Umspritzung aufweisen bzw. aufweist, mit wenigstens einem Dekorelement (18), **dadurch gekennzeichnet, daß** das Skelett (20) eine Ausnehmung (24) aufweist und daß das Dekorelement (18) ein Befestigungselement (26) aufweist, das in die Ausnehmung (24) hineinragt.

2. Lenkrad nach Anspruch 1, **dadurch gekennzeichnet, daß** die Ausnehmung (24) als Durchbruch ausgebildet ist.

3. Lenkrad nach einem der vorhergehenden Ansprüche, **dadurch gekennzeichnet, daß** das Befestigungselement (26) das Dekorelement (18) mit dem Skelett (20) verbindet.

4. Lenkrad nach Anspruch 3, **dadurch gekennzeichnet, daß** das Befestigungselement (26) Rastmittel (27) aufweist.

5. Lenkrad nach einem der vorhergehenden Ansprüche, **dadurch gekennzeichnet, daß** die Umschäumung (22) oder Umspritzung aus zwei Schalenteilen (22a, 22b) besteht, die zusammen das Skelett (20) umgeben.

6. Lenkrad nach einem der Ansprüche 1 bis 4, **dadurch gekennzeichnet, daß** die Umschäumung (22) oder Umspritzung eine Aussparung (32) aufweist, die sich in Verlängerung der Ausnehmung (24) im Skelett (20) bis zum Außenrand der Umschäumung (22) oder Umspritzung erstreckt.

7. Lenkrad nach Anspruch 6, **dadurch gekennzeichnet, daß** die Aussparung (32) außenseitig wenigstens teilweise durch einen Stopfen (34) verschlossen ist.

8. Lenkrad nach Anspruch 6 oder 7, **dadurch gekennzeichnet, daß** das Befestigungselement (26) durch die Ausnehmung (24) hindurchragt und in der Umschäumung (22) oder Umspritzung fixiert ist.
